Europäisches Patentamt

European Patent Office

Office européen des brevets

(19)

(11) Veröffentlichungsnummer: **0 315 066**
**A2**

(12) # EUROPÄISCHE PATENTANMELDUNG

(21) Anmeldenummer: 88117977.4

(22) Anmeldetag: 28.10.88

(51) Int. Cl.⁴: **B32B 15/14 , B32B 31/08**

(30) Priorität: 02.11.87 DE 3737099

(43) Veröffentlichungstag der Anmeldung:
**10.05.89 Patentblatt 89/19**

(84) Benannte Vertragsstaaten:
**AT BE CH DE ES FR GB GR IT LI LU NL SE**

(71) Anmelder: **Hoesch Maschinenfabrik Deutschland Aktiengesellschaft Borsigstrasse 22 D-4600 Dortmund 1(DE)**

(72) Erfinder: **Stückrad, Joachim, Dipl.-Ing. Plassstrasse 22c D-4600 Dortmund 13(DE)**

(54) **Verfahren zum Herstellen von Sandwichelementen.**

(57) Es wird ein Verfahren zum kontinuierlichen Herstellen von Sandwichelementen aus einer Mineralwolleschicht sowie einer unteren und einer oberen Deckschicht aus Metall vorgeschlagen, bei dem eine Mineralwollematte sowie ein unteres und ein oberes Deckband mit gleicher Geschwindigkeit einer Fügestation zugeführt und dort kontinuierlich zu einem Sandwichstrang gefügt werden, der danach auf einzelne Längen geschnitten wird. Das vorgeschlagene Verfahren ist bei hoher Produktionsleistung wirtschaftlicher als das zum Stand der Technik gehörende Verfahren zum diskontinuierlichen Herstellen von Sandwichelementen.

EP 0 315 066 A2

## Verfahren zum Herstellen von Sandwichelementen

Die Erfindung bezieht sich auf ein Verfahren zum Herstellen von Sandwichelementen aus einer Mineralwolleschicht sowie einer unteren und einer oberen Deckschicht aus Metall, bei dem die Mineralwolleschicht mit der unteren und der oberen Deckschicht verklebt wird.

Bei einem Verfahren der vorgenannten Art wird zunächst auf die untere und die obere Deckschicht je eine Klebstoffschicht aufgetragen. Danach wird die Mineralwolleschicht unten mit der auf die untere Deckschicht aufgetragenen Klebstoffschicht und oben mit der auf die obere Deckschicht aufgetragenen Klebstoffschicht in Berührung gebracht. Das so entstandene Paket wird anschließend in einer Hubpresse zu einem Sandwichelement verpreßt.

Es handelt sich hier um ein diskontinuierliches Herstellungsverfahren für Sandwichelemente, das bei hoher Produktionsleistung nicht als besonders wirtschaftlich angesehen wird.

Der Erfindung liegt die Aufgabe zugrunde, ein kontinuierliches Herstellungsverfahren für Sandwichelemente der eingangs genannten Art anzugeben, das bei hoher Produktionsleistung besonders wirtschaftlich ist.

Erfindungsgemäß wird diese Aufgabe dadurch gelöst, daß eine Mineralwollematte sowie ein unteres und ein oberes Deckband mit glei cher Geschwindigkeit einer Fügestation zugeführt und dort kontinuierlich zu einem Sandwichstrang gefügt werden, der danach auf einzelne Längen geschnitten wird.

Die obere Fläche der Mineralwollematte und die obere Fläche des unteren Deckbandes werden vor dem Eintritt in die Fügestation mit Klebstoff beaufschlagt.

Nach einem weiteren Merkmal der Erfindung werden die beiden Seitenränder eines jeden Deckbandes vor dem Eintritt in die Fügestation profiliert.

Im folgenden wird die Erfindung anhand einer Zeichnung, in der ein Ausführungsbeispiel schematisch dargestellt ist, beschrieben.

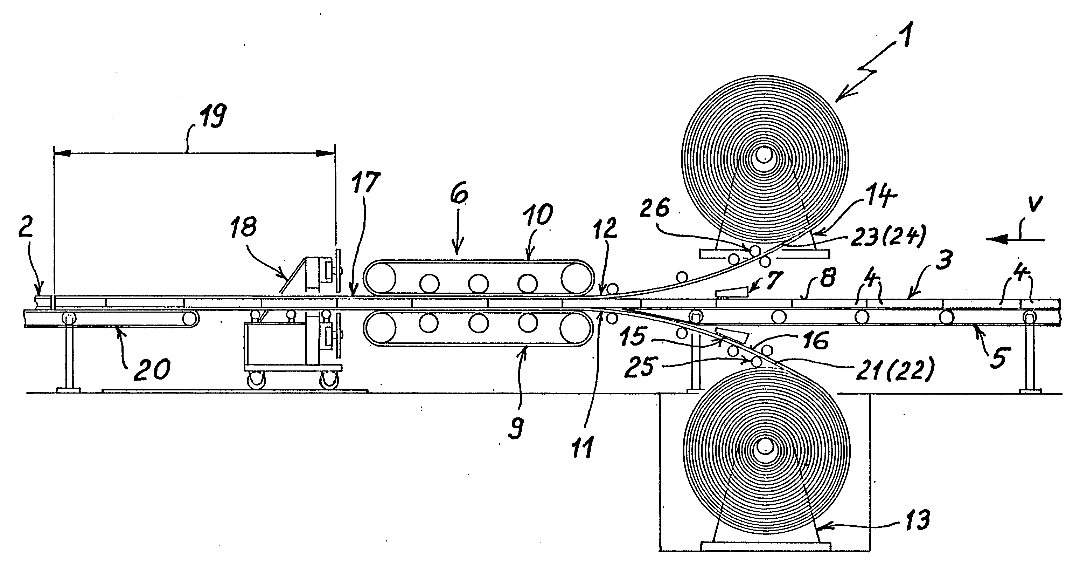

Die Zeichnung zeigt eine Vorrichtung 1 zum Herstellen von Sandwichelementen 2 im Längsschnitt.

Eine Mineralwollematte 3, die sich aus einer Vielzahl hintereinander angeordneter Mineralwolleplatten 4 zusammensetzt, wird auf einem Transportband 5 mit einer Geschwindigkeit v in Richtung zu einer Fügestation 6 transportiert. Dabei beaufschlagt eine dem Transportband 5 zugeordnete Klebstoff-Auftragevorrichtung 7 die obere Fläche 8 der Mineralwollematte 3 mit Klebstoff.

Die Fügestation 6 ist eine kontinuierlich arbeitende Doppelbandpresse, deren Preß- und Vorschubbänder 9, 10 ein unteres Deckband 11 aus Stahl und ein oberes Deckband 12 aus Stahl mit der Geschwindigkeit v von zwei Coilstationen 13, 14 abziehen.

Zwischen der Coilstation 13 und der Fügestation 6 befindet sich eine Klebstoff-Auftragevorrichtung 15, die die obere Fläche 16 des unteren Deckbandes 11 mit Klebstoff beaufschlagt.

Aus der Fügestation 6 tritt ein Sandwichstrang 17 kontinuierlich aus, der von einer mitlaufenden Trennvorrichtung 18 in einzelne Längen 19 geschnitten wird. Zum Abtransport der abgetrennten Sandwichelemente 2 ist ein Transportband 20 vorgesehen.

Die beiden SEitenränder 21, 22, 23, 24 eines jeden Deckbandes 11, 12 werden mit Hilfe von Profilrollen 25, 26 so profiliert, daß es in der Fügestation 6 zu einer Verklammerung der Deckbänder 11, 12 kommt.

## Ansprüche

1. Verfahren zum Herstellen von Sandwichelementen aus einer Mineralwolleschicht sowie einer unteren und einer oberen Deckschicht aus Metall, bei dem die Mineralwolleschicht mit der unteren und der oberen Deckschicht verklebt wird, dadurch gekennzeichnet, daß eine Mineralwollematte (3) sowie eine unteres (11) und ein oberes Deckband (12) mit gleicher Geschwindigkeit (v) einer Fügestation (6) zugeführt und dort kontinuierlich zu einem Sandwichstrang (17) gefügt werden, der danach auf einzelne Längen (19) geschnitten wird.

2. Verfahren nach Anspruch 1, dadurch gekennzeichnet, daß obere Fläche (8) der Mineralwollematte (3) und die obere Fläche (16) des unteren Deckbandes (11) vor dem Eintritt in die Fügestation (6) mit Klebstoff beaufschlagt werden.

3. Verfahren nach Anspruch 1, dadurch gekennzeichnet, daß die beiden Seitenränder (21, 22, 23, 24) eines jeden Deckbandes (11, 12) vor dem Eintritt in die Fügestation (6) profiliert werden.